# EUROPÄISCHE PATENTANMELDUNG

(11) **EP 2 182 250 A2**
(43) Veröffentlichungstag der Anmeldung: **05.05.2010**
(21) Anmeldenummer: 09169890.2
(22) Anmeldetag: 10.09.2009
(51) Int. Cl.: F16H 37/04, B60W 10/10, B60K 6/48, B60K 6/547

(54) **Antriebsstrang**

(30) Priorität: 31.10.2008 DE 102008043341
(71) Anmelder: ZF Friedrichshafen AG, 88038 Friedrichshafen (DE)
(72) Erfinder: Kaltenbach, Johannes, 88048, Friedrichshafen (DE)

(57) **Zusammenfassung**

Die Erfindung betrifft einen Antriebsstrang eines Kraftfahrzeugs, mit einem einen Verbrennungsmotor (10) und einen Elektromotor (14) umfassenden Hybridantrieb und mit einem automatischen Schaltgetriebe (11), dessen Getriebeausgang an einen Abtrieb (12) gekoppelt ist. Erfindungsgemäß ist der Verbrennungsmotor (10) an einen Getriebeeingang des automatischen Schaltgetriebes (11) gekoppelt, wobei der Elektromotor (14) an ein Planetengetriebe (15) gekoppelt ist, welches parallel zu einem vom automatischen Schaltgetriebe (11) bereitgestellten ersten Leistungspfad einen zweiten Leistungspfad bereitstellt.

## Beschreibung

Die Erfindung betrifft einen zumindest ein Getriebe und einen Hybridantrieb umfassenden Antriebsstrang eines Kraftfahrzeugs nach dem Oberbegriff des Anspruchs 1.

Die Hauptkomponenten eines Antriebsstrangs eines Kraftfahrzeugs sind ein Antriebsaggregat und ein Getriebe. Ein Getriebe wandelt Drehmomente und Drehzahlen und setzt so das Zugkraftangebot des Antriebsaggregats um. Die hier vorliegende Erfindung betrifft einen Antriebsstrang, der zumindest als Getriebe ein automatisches Schaltgetriebe und als Antriebsaggregat einen Hybridantrieb mit einem Verbrennungsmotor und einem Elektromotor umfasst.

Unter einem automatischen Schaltgetriebe soll insbesondere ein Getriebe verstanden werden, bei dem Gangwechsel automatisch mit Zugkraftunterbrechung durchgeführt werden. Bei einem automatischen Schaltgetriebe kann es sich aber auch um ein Getriebe handeln, bei dem Gangwechsel automatisch ohne Zugkraftunterbrechung durchgeführt werden.

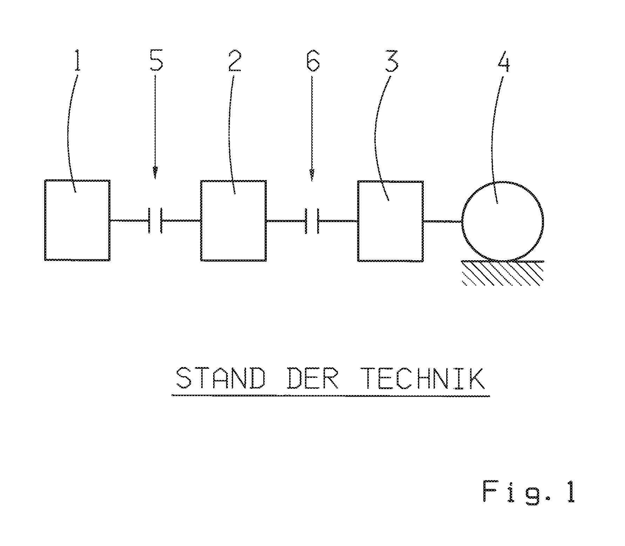

Fig. 1 zeigt ein aus der Praxis bekanntes Antriebsstrangschema für einen Antriebsstrang mit einem Hybridantrieb, der einen Verbrennungsmotor 1 und einen Elektromotor 2 umfasst. Ein Getriebe 3 setzt das Zugkraftangebot des Hybridantriebs um und stellt dasselbe an einem Abtrieb 4 bereit. In Fig. 1 ist zwischen den Verbrennungsmotor 1 und den Elektromotor 2 eine Kupplung 5 geschaltet. Weiterhin ist gemäß Fig. 1 zwischen den Elektromotor 2 und das Getriebe 3 ein getriebeexternes Anfahrelement 6 geschaltet. Anstelle eines getriebeexternen Anfahrelements 6 kann auch ein getriebeinternes Anfahrelement vorhanden sein. Die in Fig. 1 dargestellte Struktur eines Antriebsstrangs mit einem Hybridantrieb wird auch als Parallelhybrid-Antriebsstrang bezeichnet.

Bei dem in Fig. 1 gezeigten, aus der Praxis bekannten Parallelhybrid-Antriebsstrang ist das Anfahrelement 6 hohen Belastungen ausgesetzt. Dies kann zu einem vorzeitigen Verschleiß des Anfahrelements führen. Weiterhin können dann, wenn ein Getriebe verwendet wird, bei weichem Gangwechsel automatisch mit Zugkraftunterbrechung durchgeführt werden, Gangwechsel nicht unter Erhalt der Zugkraft am Abtrieb ausgeführt werden. Es besteht daher Bedarf an einem Antriebsstrang, mit weichem diese Nachteile vermieden werden können.

Hiervon ausgehend liegt der vorliegenden Erfindung das Problem zu Grunde, einen neuartigen Antriebsstrang zu schaffen. Dieses Problem wird durch einen Antriebsstrang gemäß Anspruch 1 gelöst. Erfindungsgemäß ist der Verbrennungsmotor an einen Getriebeeingang des automatischen Schaltgetriebes gekoppelt, wobei der Elektromotor an ein Planetengetriebe gekoppelt ist, weiches parallel zu einem vom automatischen Schaltgetriebe bereitgestellten ersten Leistungspfad einen zweiten Leistungspfad bereitstellt.

Bei dem erfindungsgemäßen Konzept für einen Antriebsstrang mit einem Hybridantrieb werden zwei Leistungspfade bereitgestellt, nämlich ein Leistungspfad über das automatische Schaltgetriebe und ein anderer Leistungspfad über das Planetengetriebe, wobei der Elektromotor des Hybridantriebs an das Planetengetriebe, nämlich an ein Sonnenrad des Planetengetriebes, gekoppelt ist. Hierdurch ist es möglich, beim Anfahren ein gegebenenfalls vorhandenes Anfahrelement zu entlasten. Gegebenenfalls kann vollständig auf ein Anfahrelement verzichtet werden. Weiterhin können selbst dann, wenn ein automatisches Schaltgetriebe verwendet wird, bei welchem Gangwechsel mit Zugkraftunterbrechung durchgeführt werden, Gangwechsel unter Aufrechterhaltung eines Moments und demnach unter Erhaltung der Zugkraft am Abtrieb ausgeführt werden. Dann, wenn der Elektromotor des Hybridantriebs und/oder ein Energiespeicher desselben ausfällt, kann der Antriebsstrang konventionell ausschließlich über den Verbrennungsmotor betrieben werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein aus der Praxis bekanntes Antriebsstrangschema eines Kraftfahrzeugs;
- Fig. 2: ein erstes erfindungsgemäßes Antriebsstrangschema eines Kraftfahrzeugs; und
- Fig. 3: ein zweites erfindungsgemäßes Antriebsstrangschema eines Kraftfahrzeugs.

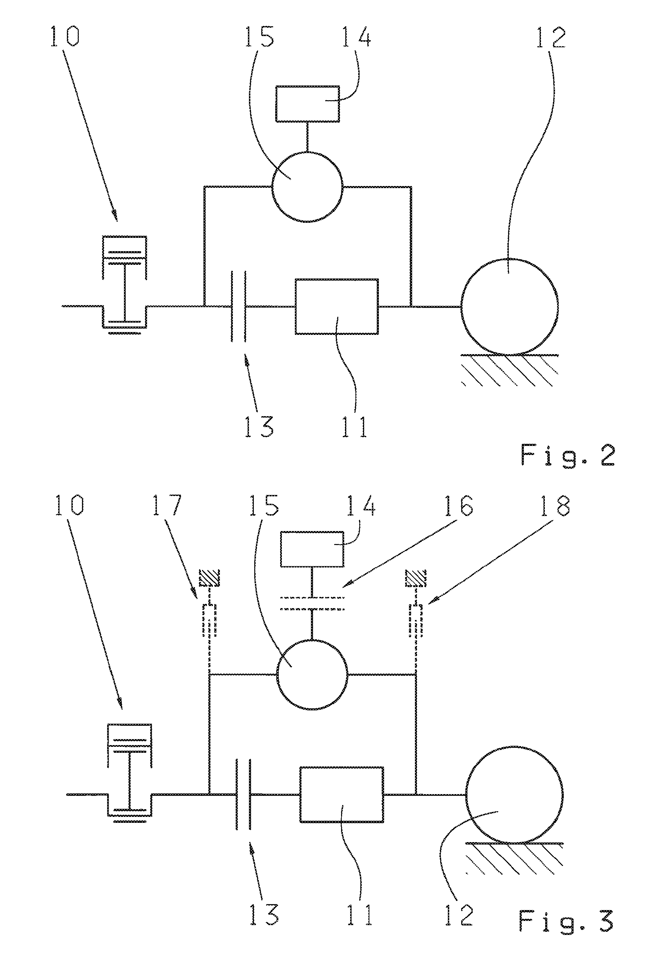

Fig. 2 zeigt ein erstes Ausführungsbeispiel eines erfindungsgemäßen Antriebsstrangs eines Kraftfahrzeugs, wobei gemäß Fig. 2 der Antriebsstrang einen Verbrennungsmotor 10, ein Getriebe 11 und einen Abtrieb 12 aufweist. In Fig. 2 ist der Verbrennungsmotor 10 unter Zwischenschaltung eines Anfahrelements 13 an den Getriebeeingang des Getriebes 11 gekoppelt, wobei es sich beim Getriebe 11 um ein automatisches Schaltgetriebe handelt. Bei einem automatischen Schaltgetriebe werden Schaltungen und damit Gangwechsel automatisch durchgeführt, und zwar insbesondere mit Zugkraftunterbrechung im Getriebe 11. Der Getriebeausgang des Getriebes 11 ist an den Abtrieb 12 gekoppelt.

Ferner verfügt der Antriebsstrang der Fig. 2 über einen Elektromotor 14, der an ein Planetengetriebe 15 gekoppelt ist, wobei das Planetengetriebe 15 einen Leistungspfad bereitstellt, der parallel zu dem vom automatischen Schaltgetriebe 11 bereitgestellten Leistungspfad verläuft. Dabei erstreckt sich der Leistungspfad des Planetengetriebes 15 parallel zum automatischen Schaltgetriebe 11 sowie zum Anfahrelement 13.

Der Elektromotor 14 greift an einem Sonnenrad des Planetengetriebes 15 an. Nach einer ersten Variante greift der Verbrennungsmotor 10 an einem Hohlrad des Planetengetriebes 15 und der Abtrieb 12 an einem Steg des Planetengetriebes 15 an. Nach einer zweiten Alternative ist der Verbrennungsmotor 10 an den Steg des Planetengetriebes 15 und der Abtrieb 12 an das Hohlrad des Planetengetriebes 15 gekoppelt.

Bei dem in Fig. 2 dargestellten Antriebsstrang erfolgt ein Anfahren und/oder ein Rangieren und/oder ein Kriechen des Antriebsstrangs unter Bereitstellung eines fahrerwunschabhängigen Abtriebsmoments am Abtrieb 12 dadurch, dass der Elektromotor 14 am Planetengetriebe 15 so viel wie möglich des vom Verbrennungsmotor 10 bereitgestellten Moments abstützt und über das Planetengetriebe 15 am Abtrieb 12 bereitstellt, wohingegen das Anfahrelement 13 so wenig wie möglich des vom Verbrennungsmotor 10 bereitgestellten Moments überträgt und über das automatische Schaltgetriebe 11 am Abtrieb 12 bereitstellt, um so in Summe das fahrerwunschabhängige Abtriebsmoment am Abtrieb 12 bereitzustellen.

Zum Anfahren und/oder Rangieren und/oder Kriechen wird demnach ein Fahrerwunschmoment für den Abtrieb 12 ermittelt, wobei so viel wie möglich dieses gewünschten Abtriebsmoments, welches vom Verbrennungsmotor 10 bereitgestellt wird, über den Leistungspfad des Planetengetriebes 15 am Abtrieb 12 bereitgestellt wird, und wobei so wenig wie möglich dieses gewünschten Abtriebsmoment, welches vom Verbrennungsmotor 10 bereitgestellt wird, über den Leistungspfad des automatischen Schaltgetriebes 11 am Abtrieb 12 bereitgestellt wird. Das vom Elektromotor 14 am Planetengetriebe 15 abstützbare Moment und damit das über den Leistungspfad des Planetengetriebes 15 am Abtrieb 12 bereitstellbare Moment ist dabei von der Dimensionierung des Elektromotors 14 sowie der Dimensionierung eines elektrischen Energiespeichers des Antriebsstrangs abhängig.

Für den Fall, dass das fahrerwunschabhängige Abtriebsmoment beim Anfahren, Rangieren oder Kriechen vollständig über den Leistungspfad des Planetengetriebes 15 am Abtrieb 12 bereitgestellt werden kann, kann das Anfahrelement 13 auch ganz geöffnet werden bzw. bleiben, wobei dann ein verschieißfreies Anfahren, Rangieren oder Kriechen möglich ist.

Soll bei dem in Fig. 2 gezeigten Antriebsstrang eine Schaltung bzw. ein Gangwechsel im automatischen Schaltgetriebe 11 erfolgen, so kann dies entweder mit geöffnetem Anfahrelement 13 oder geschlossenem Anfahrelement 13 erfolgen. In jedem Fall wird zur Ausführung einer Schaltung im automatischen Schaltgetriebe 11 mit Hilfe des Elektromotors 14 am Planetengetriebe 15 ein vom Verbrennungsmotor 10 bereitgestelltes Moment abgestützt, um so einen Schaltung ohne Zugkraftunterbrechung zu ermöglichen, indem über den Leistungspfad des Getriebes 12 auch bei Ausführung einer Schaltung im automatischen Schaltgetriebe 11 am Abtrieb 12 ein Abtriebsmoment bereitgestellt wird.

Soll bei dem in Fig. 2 gezeigten Antriebsstrang eine Schaltung im automatischen Schaltgetriebe 11 unter zumindest teilweisem Öffnen des Anfahrelements 13 erfolgen, so reduziert der Verbrennungsmotor 10 das von demselben bereitgestellte Moment bei gleichzeitiger Abstützung des Moments am Planetengetriebe 14 so weit, dass das Anfahrelement 13 momentfrei öffnen kann. Das automatische Schaltgetriebe 11 führt dann unter Ausnutzung einer getriebeinternen Synchronisation einen Gangwechsel von einem Ist-Gang in einen Ziel-Gang aus, wobei anschließend das Anfahrelement 13 schließt und der Verbrennungsmotor 10 Last aufbaut und demnach das von demselben bereitgestellte Moment erhöht. Eine getriebeinterne Synchronisation wird auch als passive Synchronisation bezeichnet, die über getriebeinterne Synchronisiereinrichtungen erfolgt.

Wie bereits erwähnt, können bei dem in Fig. 2 gezeigten Antriebsstrang Gangwechsel im automatischen Schaltgetriebe 11 auch bei geschlossenem Anfahrelement 13 durchgeführt werden, wobei hierzu der Verbrennungsmotor 10 das von demselben bereitgestellte Moment bei gleichzeitiger Abstützung des Moments am Planetengetriebe 15 so weit reduziert, dass der Getriebeeingang des automatischen Schaltgetriebes 11 momentfrei ist bzw. wird. Nach dem Auslegen des Ist-Gangs erfolgt dann eine getriebeexterne Synchronisation und das Einlegen des Ziel-Gangs im automatischen Schaltgetriebe 11 zur Ausführung des Gangwechsel, wobei anschließend der Verbrennungsmotor 10 das von demselben bereitgestellte Moment erhöht und wiederum eine Last aufbaut. Eine getriebeexterne Synchronisation wird auch als aktive Synchronisation bezeichnet und erfolgt dadurch, dass der Verbrennungsmotor 10 und/oder der Elektromotor 14 das am Getriebeeingang des automatischen Schaltgetriebes 11 anliegende Moment nach dem Auslegen des Ist-Gangs und vor dem Einlegen des Ziel-Gangs zur Drehzahländerung anpasst.

Soll bei dem in Fig. 2 gezeigten Antriebsstrang ein aktives Stoppen des Verbrennungsmotors 10 oder ein aktives Starten des Verbrennungsmotors 10 erfolgen, so stützt z. B. eine Fahrzeugbremse des Antriebsstrangs das vom Verbrennungsmotor 10 bereitgestellte Moment ab, wobei gleichzeitig das automatische Schaltgetriebe 11 eine Neutralposition einnimmt und/oder das Anfahrelement 13 geöffnet ist. Alternativ ist es zum aktiven Starten des Verbrennungsmotors 10 oder zum aktiven Stoppen desselben möglich, dass das automatische Schaltgetriebe 11 blockiert und dass Anfahrelement 13 geöffnet ist.

Bei dem in Fig. 2 gezeigten Antriebsstrang kann ein sogenanntes Boosten bei geschlossenem Anfahrelement 13 und bei im automatischen Schaltgetriebe 11 eingelegtem Gang dadurch erfolgen, dass der Elektromotor 14 motorisch betrieben wird. Wird bei geschlossenem Anfahrelement 13 und bei im automatischen Schaltgetriebe 11 eingelegtem Gang der Elektromotor 14 generatorisch betrieben, so erfolgt ein sogenanntes Rekuperieren.

Nach einer Weiterbildung der hier vorliegenden Erfindung kann das Anfahrelement 13 der Fig. 2 auch entfallen, wobei dann der Leistungspfad des Planetengetriebes 15 wiederum parallel zum Leistungspfad des automatischen Schaltgetriebes 11 verläuft. Auch für den Fall, dass kein Anfahrelement 13 vorhanden ist, dass also der Verbrennungsmotor 10 unmittelbar an den Getriebeeingang des automatischen Schaltgetriebes 11 gekoppelt ist, können die obigen Funktionen Anfahren bzw. Rangieren bzw. Kriechen, Schalten, Starten des Verbrennungsmotors, Stoppen des Verbrennungsmotors, Boosten und Rekuperieren gewährleistet werden.

Dann, wenn der Verbrennungsmotor 10 unmittelbar ohne dazwischengeschaltetes Anfahrelement 13 am Getriebeeingang des automatischen Schaltgetriebes 11 angreift, erfolgt ein Anfahren und/oder Rangieren und/oder Kriechen des Antriebsstrangs unter Bereitstellung eines fahrerwunschabhängigen Abtriebsmoments am Abtrieb 12 ausschließlich über den Elektromotor 14 sowie das Planetengetriebe 15, wobei hierzu dann das automatische Schaltgetriebe 11 eine Neutralposition einnimmt und der Elektromotor 14 sowie ein den Elektromotor 14 zugeordneter elektrischer Energiespeicher in Bezug auf das maximal mögliche fahrerwunschabhängige Abtriebmoment dimensioniert sind.

Ein Schalten und damit Gangwechsel im automatischen Schaltgetriebe 11 bei einem Antriebsstrang ohne Anfahrelement 13 erfolgt analog zu dem in Bezugnahme auf Fig. 2 beschriebenen Schalten bei geschlossenem Anfahrelement 13.

Das aktive Starten des Verbrennungsmotors 10 sowie das aktive Stoppen desselben erfolgt ebenfalls wie im Zusammenhang mit Fig. 2 beschrieben, wobei das automatische Schaltgetriebe 11 eine Neutralposition einnimmt und das vom Verbrennungsmotor 10 bereitgestellte Moment von einer Fahrzeugbremse abgestützt wird.

Das Boosten und Rekuperieren bei einem Antriebsstrang ohne Anfahrelement 13 erfolgt wie oben beschrieben analog zu einem Antriebsstrang mit Anfahrelement 13.

Fig. 3 zeigt eine weitere vorteilhafte Ausgestaltung des erfindungsgemäßen Antriebsstrangs, wobei gemäß Fig. 3 zwischen den Elektromotor 14 und das Planetengetriebe 15 eine Kupplung 16 geschaltet ist. Mit Hilfe der Trennkupplung 16 besteht die Möglichkeit, den Elektromotor 14 vom Planetengetriebe 15 abzukoppeln, um z. B. Nulllastverluste zu vermeiden. Bei nicht vorhandener Kupplung 16 muss der Elektromotor 14 stets mitdrehen und kann je nach Standgetriebeübersetzung des Planetengetriebes 15 und Anbindung an das Planetengetriebe 15 deutlich höhere Drehzahlen als der Verbrennungsmotor 10 erreichen.

Nach einer weiteren vorteilhaften Weiterbildung der Erfindung greift am zweiten Leistungspfad zwischen dem Verbrennungsmotor 10 und dem Planetengetriebe 15 eine Bremse 17 an, die Bremse 17 greift also an einer Kurbelwelle des Verbrennungsmotors 10 an. Durch Betätigung dieser Bremse 17 ist ein rein elektrisches Fahren sowie ein Rekuperieren bei stillstehendem Verbrennungsmotor 10 möglich. Hierzu ist dann das Anfahrelement 13 geöffnet und das automatische Schaltgetriebe 11 befindet sich in Neutralposition.

Ebenso kann am zweiten Leistungspfad zwischen dem Planetengetriebe 15 und dem Abtrieb 12 eine Bremse 18 angreifen, wobei durch Betätigung der Bremse 18 ein aktives Starten und ein aktives Stoppen des Verbrennungsmotors 10 durch den Elektromotor 14 im Stillstand möglich ist.

### Bezugszeichen

- 1: Verbrennungsmotor
- 2: Elektromotor
- 3: Getriebe
- 4: Abtrieb
- 5: Kupplung
- 6: Anfahrelement

- 10: Verbrennungsmotor
- 11: Getriebe
- 12: Abtrieb
- 13: Anfahrelement
- 14: Elektromotor
- 15: Planetengetriebe
- 16: Kupplung
- 17: Bremse
- 18: Bremse

## Patentansprüche

1. Antriebsstrang eines Kraftfahrzeugs, mit einem einen Verbrennungsmotor und einen Elektromotor umfassenden Hybridantrieb und mit einem automatischen Schaltgetriebe, dessen Getriebeausgang an einen Abtrieb gekoppelt ist, **dadurch gekennzeichnet, dass** der Verbrennungsmotor (10) an einen Getriebeeingang des automatischen Schaltgetriebes (11) gekoppelt ist, und dass der Elektromotor (14) an ein Planetengetriebe (15) gekoppelt ist, welches parallel zu einem vom automatischen Schaltgetriebe (11) bereitgestellten ersten Leistungspfad einen zweiten Leistungspfad bereitstellt.

2. Antriebsstrang nach Anspruch 1, **dadurch gekennzeichnet, dass** der Elektromotor (14) an ein Sonnenrad des Planetengetriebes (15) gekoppelt ist, dass der Verbrennungsmotor (10) an ein Hohlrad des Planetengetriebes (15) gekoppelt ist, und dass der Abtrieb (12) an einen Steg des Planetengetriebes (15) gekoppelt ist.

3. Antriebsstrang nach Anspruch 1, **dadurch gekennzeichnet, dass** der Elektromotor (14) an ein Sonnenrad des Planetengetriebes (15) gekoppelt ist, dass der Verbrennungsmotor (10) an einen Steg des Planetengetriebes (15) gekoppelt ist, und dass der Abtrieb (12) an ein Hohlrad des Planetengetriebes (15) gekoppelt ist.

4. Antriebsstrang nach einem der Ansprüche 1 bis 3, **dadurch gekennzeichnet, dass** zwischen den Verbrennungsmotor (10) und das automatische Schaltgetriebe (11) ein Anfahrelement (13) derart geschaltet ist, dass der zweite Leistungspfad des Planetengetriebes (15) sich parallel zum automatischen Schaltgetriebe (11) und zum Anfahrelement (13) erstreckt.

5. Antriebsstrang nach einem der Ansprüche 1 bis 4, **dadurch gekennzeichnet, dass** zwischen den Elektromotor (14) und das Planetengetriebe (16) eine Kupplung (16) geschaltet ist.

6. Antriebsstrang nach einem der Ansprüche 1 bis 5, **dadurch gekennzeichnet, dass** am zweiten Leistungspfad zwischen Verbrennungsmotor (10) und Planetengetriebe (15) eine Bremse (17) angreift.

7. Antriebsstrang nach einem der Ansprüche 1 bis 6, **dadurch gekennzeichnet, dass** am zweiten Leistungspfad zwischen Planetengetriebe (15) und Abtrieb (12) eine Bremse (18) angreift.

8. Antriebsstrang nach einem der Ansprüche 1 bis 7, **dadurch gekennzeichnet, dass** dann, wenn der Verbrennungsmotor (10) mittelbar mit dazwischen geschaltetem Anfahrelement (13) am Getriebeeingang des automatischen Schaltgetriebes (11) angreift, ein Anfahren und/oder Rangieren und/oder Kriechen des Antriebsstrangs unter Bereitstellung eines fahrerwunschabhängigen Abtriebmoments am Abtrieb dadurch erfolgt, dass der Elektromotor (14) am Planetengetriebe (15) so viel wie möglich des vom Verbrennungsmotor (10) bereitgestellten Moments abstützt und über das Planetengetriebe (15) am Abtrieb (12) bereitstellt, und dass das Anfahrelement (13) so wenig wie möglich des vom Verbrennungsmotor (10) bereitgestellten Moments überträgt und über das automatische Schaltgetriebe (11) am Abtrieb (12) bereitstellt, um so in Summe das fahrerwunschabhängige Abtriebmoment am Abtrieb (12) bereitzustellen.

9. Antriebsstrang nach Anspruch 8, **dadurch gekennzeichnet, dass** das vom Elektromotor (14) am Planetengetriebe (15) abgestützte Moment von der Dimensionierung des Elektromotors und der Dimensionierung eines elektrischen Energiespeichers abhängt.

10. Antriebsstrang nach einem der Ansprüche 1 bis 7, **dadurch gekennzeichnet, dass** dann, wenn der Verbrennungsmotor (10) unmittelbar ohne dazwischen geschaltetes Anfahrelement am Getriebeeingang des automatischen Schaltgetriebes (11) angreift, ein Anfahren und/oder Rangieren und/oder Kriechen des Antriebsstrangs unter Bereitstellung eines fahrerwunschabhängigen Abtriebmoments am Abtrieb ausschließlich über den Elektromotor (14) und das Planetengetriebe (15) erfolgt, wobei hierzu das automatische Schaltgetriebe (11) eine Neutralposition einnimmt.

11. Antriebsstrang nach Anspruch 1 0, **dadurch gekennzeichnet, dass** der Elektromotor (14) und ein elektrischer Energiespeicher in Bezug auf das maximal mögliche fahrerwunschabhängige Abtriebmoment dimensioniert sind.

12. Antriebsstrang nach einem der Ansprüche 1 bis 11, **dadurch gekennzeichnet, dass** bei Ausführung einer Schaltung im automatischen Schaltgetriebe (11) der Elektromotor (14) am Planetengetriebe (15) ein vom Verbrennungsmotor (10) bereitgestelltes Moment abstützt, um so eine Schaltung ohne Zugkraftunterbrechung zu ermöglichen.

13. Antriebsstrang nach Anspruch 12, **dadurch gekennzeichnet, dass** hierzu dann, wenn der Verbrennungsmotor (10) mittelbar mit dazwischen geschaltetem Anfahrelement (13) am Getriebeeingang des automatischen Schaltgetriebes (11) angreift, der Verbrennungsmotor (10) das von demselben bereitgestellte Moment bei gleichzeitiger Abstützung des Moments am Planetengetriebe (15) soweit reduziert, dass das Anfahrelement (13) momentfrei öffnet, wobei das automatische Schaltgetriebe (11) unter Ausnutzung einer getriebeinternen Synchronisation einen Gangwechsel von einem Ist-Gang in einen Ziel-Gang ausführt, und wobei anschließend das Anfahrelement (13) schließt und der Verbrennungsmotor (10) das von demselben bereitgestellte Moment erhöht.

14. Antriebsstrang nach Anspruch 12, **dadurch gekennzeichnet, dass** hierzu dann, wenn der Verbrennungsmotor (10) unmittelbar ohne dazwischen geschaltetes Anfahrelement oder mittelbar mit dazwischen geschaltetem Anfahrelement (13) am automatischen Schaltgetriebe (11) angreift, das gegebenenfalls vorhandene Anfahrelement geschlossen bleibt und der Verbrennungsmotor (10) das von demselben bereitgestellte Moment bei gleichzeitiger Abstützung des Moments am Planetengetriebe (15) soweit reduziert, dass der Getriebeeingang des automatischen Schaltgetriebes (11) momentfrei ist, wobei das automatische Schaltgetriebe (11) unter Ausnutzung einer getriebeexternen Synchronisation einen Gangwechsel von einem Ist-Gang in einen Ziel-Gang ausführt, und wobei anschließend der Verbrennungsmotor (10) das von demselben bereitgestellte Moment erhöht.

15. Antriebsstrang nach Anspruch 14, **dadurch gekennzeichnet, dass** zur getriebeexternen Synchronisation der Verbrennungsmotor (10) und/oder der Elektromotormotor (14) das am Getriebeeingang anliegende Moment nach dem Auslegen des Ist-Gangs und vor dem Einlegen des Ziel-Gangs anpasst.

16. Antriebsstrang nach einem der Ansprüche 1 bis 15, **dadurch gekennzeichnet, dass** zum aktiven Stoppen oder aktiven Starten des Verbrennungsmotors eine Fahrzeugbremse das vom Verbrennungsmotor (10) bereitgestellte Moment abstützt und gleichzeitig das automatische Schaltgetriebe (11) eine Neutralposition einnimmt und/oder das gegebenenfalls vorhandene Anfahrelement (13) geöffnet ist.

17. Antriebsstrang nach einem der Ansprüche 1 bis 15, **dadurch gekennzeichnet, dass** zum aktiven Stoppen oder aktiven Starten des Verbrennungsmotors das automatische Schaltgetriebe (11) blockiert und das Anfahrelement (13) geöffnet ist.

18. Verfahren zum Betreiben eines Antriebsstrangs mit Merkmalen nach einem oder mehreren der Ansprüche 1 bis 17.
